# EUROPEAN PATENT APPLICATION

(11) **EP 2 461 596 A1**
(43) Date of publication of application: **06.06.2012**
(21) Application number: 11181141.0
(22) Date of filing: 13.09.2011
(51) Int. Cl.: H04N 13/04

(54) **3D glasses and control method thereof**

(30) Priority: 01.12.2010 KR 20100121464
(71) Applicant: Samsung Electronics Co., Ltd., Gyeonggi-do 442-742 (KR)
(72) Inventor: Bak, Bong-gil, Suwon-si (KR)
(74) Representative: Clark, David James

(57) **Abstract**

Three-dimensional (3D) glasses for viewing a 3D display apparatus and a control method thereof are provided. The 3D glasses include: a glass unit including a left eye glass and a right eye glass; a driving unit which drives the glass unit; a mode setting unit which sets an operation mode of the glass unit between a 3D viewing mode or a 2D viewing mode; and a control unit which controls the driving unit to change an opening and closing shutter setting or a rotational direction of the glass unit according to the set operation mode set by the mode setting unit. Accordingly, a user convenience is improved.

## Description

### BACKGROUND

### 1. Field

Apparatuses and methods consistent with exemplary embodiments relate to three-dimensional (3D) glasses and a control method thereof, and more particularly, to 3D glasses for use with a 3D display apparatus for displaying a 3D image, and a 3D glasses-control method applied to the same.

### 2. Description of the Related Art

A three-dimensional (3D) or stereoscopic image technology is being applied in very various fields, such as an information and telecommunication, broadcasting, medical care, educational training, military affairs, gaming, animation, virtual reality, computer aided drafted (CAD), industrial technology, etc., and forms a basic core technology of next generation 3D multimedia information and telecommunication used in common in such various fields.

Generally, a 3D effect that a human recognizes is obtained by a combination of a degree of change in thickness of a crystalline lens according to a position of an object being observed, a difference in angle of both eyes to the object, a difference in position and shape of object images respectively viewed by left and right eyes, a disparity caused by a movement of the object, an effect due to all sorts of mental states and memories, and the like.

Among those, the binocular disparity presented as the two eyes of the human are spaced-apart approximately 6-7cm in a horizontal direction from each other forms a very important factor of the 3D effect. In other words, the human looks at the object with her or his two eyes having the difference in angle to the object due to the binocular disparity. Images observed through the respective eyes differ due to the difference in angle of the two eyes to the object. When the two images are transmitted through respective retinas of the two eyes to a brain, the brain unites the two image information together and thus is capable of feeling an original 3D or stereoscopic image.

A stereoscopic image display apparatus is classified as a glass type display apparatus using special glasses and a non-glass type display apparatus not using the special glasses. The glass type display apparatus is classified as a color filter type display apparatus to divide and select images by using color filters complementary to each other, a polarization filter type display apparatus to divide left and right eye images by using an obscuration effect by a combination of orthogonal polarization elements, and a shutter glass type display apparatus to allow a user to feel the 3D effect by alternatively shading left and right eye images in response to synchronization signals for projecting left and right eye image signals on a screen.

Among these, the shutter glass type display apparatus, as a display apparatus using the binocular disparity, allows a user to feel an impression of space due to her or his brain work to images viewed from different angles by synchronizing an on-off action of left and right eyes in 3D glasses with images provided from the display apparatus.

In other words, to watch the 3D image, the user should wear the 3D glasses. In general, however, a viewing activity is done in a form in which more than two users share viewing motion images, such as a movie, a drama, a sports match and the like, in a space, such as a living room in a house. In this case, there is a problem in that even though one user wants to keep watching the 3D image and other user expresses her or his discomfort over watching the 3D image, in current 3D viewing environment, users cannot select output modes for motion images in which they want to watch, individually. In other words, there is a problem in that if there is one display apparatus in the house, a video output mode for one of 3D and 2D video should be selected, thereby causing all viewers in the house to share this view output mode.

### SUMMARY

Exemplary embodiments overcome the above disadvantages and other disadvantages not described above. Also, an exemplary embodiment is not required to overcome the disadvantages described above, and an exemplary embodiment may not overcome any of the problems described above.

Aspects of one or more exemplary embodiments provide 3D glasses, which can control a 2D viewing mode or a 3D viewing mode, and a 3D glasses-control method applied to the same.

According to an aspect of an exemplary embodiment, there is provided 3D glasses for viewing a 3D display apparatus, the 3D glasses including: a glass unit including a left eye glass and a right eye glass; a driving unit which drives the glass unit; a mode setting unit which sets an operation mode of the glass unit between a 3D viewing mode and a 2D viewing mode; and a control unit which controls the driving unit to change an opening and closing shutter setting or a rotational direction of the glass unit according to the set operation mode set by the mode setting unit.

The 3D glasses may be a shutter glass type glasses or a polarization glass type glasses.

When the 3D glasses are the shutter glass type glasses, the control unit may control to simultaneously open and close the left eye glass and the right eye glass to block out one of a left eye image and a right eye image corresponding to a frame of a 3D image if the operation mode of the glass unit is set in the 2D viewing mode.

When the 3D glasses are the polarization glass type glasses, the control unit may control to rotate one of the left eye glass and the right eye glass to block out one of a left eye image and a right eye image corresponding to a frame of a 3D image if the operation mode of the glass unit is set in the 2D viewing mode.

The control unit may control to rotate the one of the left eye glass and the right eye glass by an angle of 90 degrees.

The 3D glasses may further include a sensing unit which determines a slope of the 3D glasses to a direction of gravity, and the control unit may control to change the operation mode of the glass unit according to the determined slope of the 3D glasses determined by the sensing unit.

The mode setting unit may set the operation mode of the glass unit according to a user command or a preset value.

The 3D glasses may further include a switch unit which sets the operation mode of the glass unit to the 2D viewing mode to fix the 2D viewing mode as a default viewing mode.

According to an aspect of another exemplary embodiment, a control method of 3D glasses for viewing a 3D display apparatus includes: setting an operation mode of a glass unit, of the 3D glasses, including a left eye glass and a right eye glass between a 3D viewing mode and a 2D viewing mode; and controlling an opening and closing shutter setting of the glass unit or a rotational direction of the glass unit according to the set operation mode.

The 3D glasses may be a shutter glass type glasses or a polarization glass type glasses.

When the 3D glasses are the shutter glass type glasses, the controlling may include simultaneously opening and closing the left eye glass and the right eye glass to block out one of a left eye image and a right eye image corresponding to a frame of a 3D image if the operation mode of the glass unit is set in the 2D viewing mode.

When the 3D glasses are the polarization glass type glasses, the controlling may include rotating one of the left eye glass and the right eye glass to block out one of a left eye image and a right eye image corresponding to a frame of a 3D image if the operation mode of the glass unit is set in the 2D viewing mode.

The controlling may include rotating the one of the left eye glass or the right eye glass by an angle of 90 degrees.

The control method may further include determining a slope of the 3D glasses to a direction of gravity, and the controlling may include controlling to change the operation mode of the glass unit according to the determined slope of the 3D glasses.

The operation mode of the glass unit may be set according to a user command or a preset value.

The setting may further include setting the operation mode of the glass unit to the 2D viewing mode according to a user command to fix the 2D viewing mode as a default viewing mode.

According to an aspect of another exemplary embodiment, there is provided a 3D image providing system including: a 3D image processing apparatus for outputting a 3D image; and 3D glasses for viewing the output 3D image output by the 3D image processing apparatus, the 3D glasses including: a glass unit including a left eye glass and a right eye glass; a driving unit which drives the glass unit; a mode setting unit which sets an operation mode of the glass unit between a 3D viewing mode or a 2D viewing mode; and a control unit which controls the driving unit to change an opening and closing shutter setting or a rotational direction of the glass unit according to the set operation mode set by the mode setting unit.

Accordingly, in a space in which one display apparatus is provided, a plurality of viewers can select viewing modes in which they want to watch, and watch contents in the selected viewing modes, individually.

### BRIEF DESCRIPTION OF THE DRAWINGS

According to the present invention there is provided an apparatus and method as set forth in the appended claims. Other features of the invention will be apparent from the dependent claims, and the description which follows.

The above and/or other aspects will become more apparent by describing certain exemplary embodiments with reference to the accompanying drawings, in which:
FIG. 1 is a view showing a 3D image providing system according to an exemplary embodiment;
FIG. 2 is a block diagram showing a construction of a display apparatus according to an exemplary embodiment;
FIGS. 3A and 3B are views showing constructions of 3D glasses according to various exemplary embodiments, respectively;
FIGS. 4A and 4B are views explaining methods for embodying a 2D viewing mode according to various exemplary embodiments, respectively;
FIGS. 5A to 5C are views explaining a method for determining a viewing mode of the 3D glasses, according to an exemplary embodiments; and
FIG. 6 is a flow chart explaining a control method of the 3D glasses according to an exemplary embodiment.

### DETAILED DESCRIPTION OF EXEMPLARY EMBODIMENTS

Exemplary embodiments are described in greater detail below with reference to the accompanying drawings. Expressions such as "at least one of," when preceding a list of elements, modify the entire list of elements and do not modify the individual elements of the list.

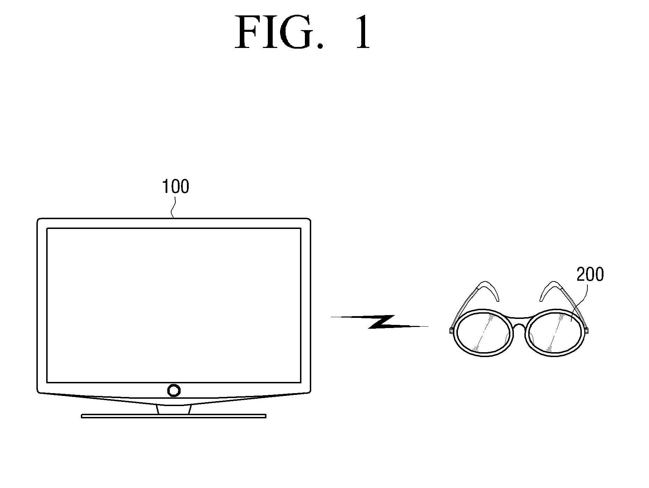

FIG. 1 is a view showing appearances of a three-dimensional (3D) image providing system according to an exemplary embodiment. As shown in FIG, 1, the 3D image providing system includes a display apparatus 100 and 3D glasses 200.

The display apparatus 100 may be embodied to display a 3D image or both a 2D image and the 3D image. Here, the display apparatus 100 may be embodied by a 3D television (TV), though it is understood that another exemplary embodiment is not limited thereto. For example, the display apparatus 100 may be embodied by any other apparatus that can display the 3D image. For example, the display apparatus 100 may be a 3D monitor, a 3D image projector and the like.

If the display apparatus 100 displays the 2D image, the display apparatus 100 can use the same method as that of a related art 2D display apparatus. If the display apparatus 100 displays the 3D image, the display apparatus 100 can receive a 3D image transmitted from a photographing apparatus, such as a camera or the like, or a 3D image emitted from an external device, such as a broadcasting station after being photographed by the camera and edited and treated at the broadcasting station, and processes the received 3D image to display them on a screen. Moreover, the display apparatus 100 or external device may generate the 3D data, for example by receiving a 2D image and converting the 2D image into a 3D image. Furthermore, the display apparatus 100 creates a left eye image and a right eye image based on a format of the 3D image, and enables the created left eye image and the created right eye image to be time-shared and alternatively displayed.

The 3D glasses 200 may be embodied by active type shutter glasses or passive type polarization glasses. The shutter glass method, as a display method using the disparity of both eyes, is a method that allows a user to feel an impression of depth due to her or his brain combining images viewed from different angles by synchronizing an on-off action of left and right eyes in the 3D glasses with the images provided from the display apparatus 100.

A principle of the shutter glass method is what synchronizes shutters in the 3D glasses 200 with left and right eye image frames displayed by the display apparatus 100. In other words, 3D stereoscopic images can be created by selectively opening and closing left or right eye glasses of the 3D glasses according to left and right eye image signals of the display apparatus 100.

In addition, a principle of the polarization glass method is that the glasses separately receive left and right eye image displayed by the display apparatus 100 through polarization lenses, thereby allowing the user to combine the received images in her or his brain to perceive stereoscopic images.

The 3D image providing system according to an exemplary embodiment may further include a camera (not shown) for creating the 3D image.

The camera (not shown), as a kind of photographing apparatus for creating the 3D image, creates a left eye image photographed with a view to provide the left eye image to a left eye of the viewer and a right eye image photographed with a view to provide the right eye image to a right eye of the viewer. That is, the 3D image includes the left eye image and the right eye image, which are alternatively provided to the left eye and right eye of the user, thereby allowing the user to feel the 3D effect by the binocular disparity.

For this, the camera may include a left eye camera for creating the left eye image and a right eye camera for creating the right eye image. A space between the left eye camera and the right eye camera is set considering a spaced distance between both eyes of the human.

The camera (not shown) transmits the photographed left eye image and the photographed right eye image to the display apparatus 100. Particularly, the left eye image and the right eye image, which are transmitted from the camera (not shown) to the display apparatus 100, may be transmitted in a format in which only one of the left eye image and the right eye image is included in one frame or a format in which both the left eye image and the right eye image are included in one frame.

The camera (not shown) may determine one format among various formats of the 3D image in advance, and may create a 3D image according to the determined format to transmit the 3D image to the display apparatus 100.

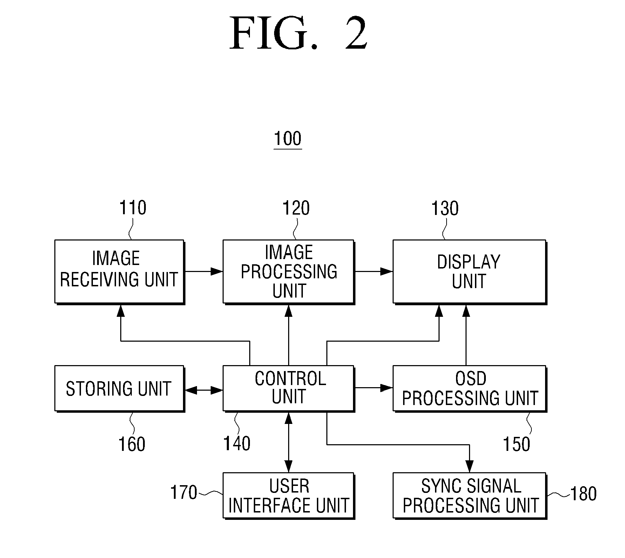

FIG. 2 is a block diagram showing a construction of a display apparatus 100 according to an exemplary embodiment.

Referring to FIG. 2, the stereoscopic image display apparatus 100 includes an image receiving unit 110, an image processing unit 120, a display unit 130, a control unit 140, an on screen display (OSD) processing unit 150, a storing unit 160, a user interface unit 170, and a sync signal processing unit 180.

The image receiving unit 110 receives a 2D image signal or a 3D image signal emitted by wire or wirelessly from a broadcasting station or a satellite and demodulates the received signal. In addition, the image receiving unit 110 may be connected to an external device, such as a camera or the like, to receive a 3D image therefrom. The external appliance may be connected wirelessly, or by wire through an interface, such as S-Video, Component, Composite, D-sub, DVI, HDMI, or the like. Since a 2D image processing method is apparent to those skilled in the art, the following description will be explained with priority given to a 3D image processing method.

As described above, the 3D image, as an image including at least one frame, is an image configured so that both the left eye image and the right eye image are included in one image frame or one of the left eye image and the right eye image is included in one frame. In other words, the 3D image is the image created according to one of various 3D formats.

Accordingly, the 3D image received by the image receiving unit 110 may be in various formats, for example, a format according to one of a general top-bottom type, a side by side type, a horizontal interleave type, a vertical interleave type or a checker board type, and a sequential frame format.

The image receiving unit 110 transmits the received 2D or 3D image to the image processing unit 120.

The image processing unit 120 performs a signal processing, such as at least one of a video decoding, a format analysis, a video scaling, and the like, and a task, such as a graphic user interface (GUI) adding or the like, to the 2D image or the 3D image received from the broadcasting receiving unit 110.

Particularly, the image processing unit 120 creates a left eye image and a right eye image corresponding to a size of one picture (for example, 1920 x 1080) by using the format of the 2D image or the 3D image inputted to the image receiving unit 110.

For instance, if the format of the 3D image is a format according to the general top-bottom type, the side by side type, the horizontal interleave type, the vertical interleave type, the checker board type, or the sequential frame type, the image processing unit 120 creates a left eye image and a right eye image for providing to the user by extracting a left eye image portion and a right eye image portion from each image frame and up-scaling or interpolating the extracted left eye image portion and the extracted right eye image portion.

Also, if the format of the 3D image is a format according to a general frame sequence type, the image processing unit 120 extracts a left eye image and a right eye image from each image frame to display the image to the user.

Information on the format of the inputted 3D image may be included or may not be included in the 3D image signal.

For instance, if the information on the format of the inputted 3D image is included in the 3D image signal, the image processing unit 120 analyses the 3D image to extract information on the format therefrom, and processes the 3D image according to the extracted information. In contrast, if the information on the format of the inputted 3D image is not included in the 3D image signal, the image processing unit 120 processes the 3D image according to a format inputted by the user or a preset format.

The image processing unit 120 time-shares the extracted left eye image and the extracted right eye image to alternately transmit the extracted images to the display unit 130. For example, the image processing unit 120 transmits the left eye image and the right eye image to the display unit 130 in a chronological order of 'a left eye image (L1) → a right eye image (R1) → a left eye image (L2) → a right eye image (R2) →...'.

In addition, the image processing unit 120 may provide processing to insert an OSD image created by the OSD processing unit 150 into a black image or processing to provide the OSD image itself as one image.

The display unit 130 alternatively outputs the left eye image and the right eye image transmitted from the image processing unit 120 to provide images to the user.

The control unit 140 controls a general operation of the display apparatus 100 according to a user command received from the user interface unit 170 or a preset option.

Particularly, the control unit 140 controls the image receiving unit 110 and the image processing unit 120 to receive the 3D image, to separate the received 3D image into the left eye image and the right eye image, and to scale or interpolate the separated left eye image and the separated right eye image in sizes capable of being displayed on one picture, respectively.

In addition, the control unit 140 may control the display unit 130 to switch a polarization direction of the image provided through the display unit 130 to coincide with the left eye image or the right eye image.

Also, the control unit 140 may control an operation of the OSD processing unit 150 to be described below.

The OSD processing unit 150 operates to create an OSD message, which is displayed overlapping on the 2D image or the 3D image outputted to the display unit 130. Here, the OSD message may be a 2D image or a 3D image.

An OSD picture, as a picture displaying warning words, menus, a letter or figure, such as a time and a channel number, or the like, on the display screen, may be displayed overlapping on the display image. For instance, the warning words may be displayed in an OSD form according to a preset option or event.

Otherwise, as the user operates an input apparatus, such as an operation panel or a remote controller, a main menu, a sub menu and the like may be displayed in the OSD form on the display screen to enable the user to select desired functions therefrom.

The menus may include option items capable of being selected on the display apparatus or items capable of adjusting functions of the display apparatus.

In addition, the OSD processing unit 150 may perform tasks, such as a 2D/3D conversion or mode selection, a transparency control, a color adjustment, a size adjustment, a shape and position adjustment, a highlight, an animation effect and so on of the OSD picture, under the control of the control unit 140.

If the 3D image is displayed on the display unit 130 according to a preset option (or a preset event) or a user command, the control unit 140 may control to display the 3D image with a preset type of OSD image created by the OSD processing unit 140. To be specific, an OSD picture including a phrase informing the user that the 3D image is being broadcasted may be created.

The storing unit 160, as a storing medium storing all sorts of programs used in order to operate the stereoscopic image display apparatus 100, may be embodied by a memory, a hard disk drive (HDD) or the like. For instance, the storing unit 160 may include a ROM storing a program for performing an operation of the control unit 140, and a RAM temporarily storing data generated according to the operation of the control unit 140. In addition, the storing unit 160 may further include an electrically erasable and programmable ROM (EEPROM).

The user interface unit 170 transmits the user command inputted from the input apparatus, such as the remote controller, the input panel or the like, to the control unit 140.

The sync signal processing unit 180 creates sync signals for alternatively opening a left eye shutter glass and a right eye shutter glass of the 3D glasses 200 (when the 3D glasses are the shutter glass type glasses) in synchronization with display timings of the left eye image and the right eye image, and transmits the sync signals to the 3D glasses 200. This allows the left eye shutter glass and the right eye shutter glass of the 3D glasses 200 to be alternately opened and closed, so that that in a left eye open timing of the 3D glasses 200, the left eye image is displayed on the display unit 130 and in a right eye open timing of the 3D glasses 200, the right eye image is displayed on the display unit 130. Here, the sync signals may be transmitted in an infrared (IR) form, a Bluetooth form, etc.

The control unit 140 controls a general operation of the stereoscopic image display apparatus 100 according to a user input or command received from the user interface unit 170.

Particularly, the control unit 140 controls the image receiving unit 110 and the image processing unit 120 to receive the 3D image, to separate the received 3D image into the left eye image and the right eye image, and to scale or interpolate the separated left image and the separated right image in sizes capable of being displayed on one picture, respectively.

In addition, the control unit 140 controls the OSD processing unit 150 to create the OSD message corresponding to the user input or command received from the user interface unit 170, and controls the sync signal processing unit 180 to create and transmit the sync signals in synchronization with output or display timings of the left eye image and the right eye image.

Also, the control unit 140 controls the display unit 130 to display the OSD message between the display timings of the left eye image and the right eye image, so that when the user wears the 3D glasses, the user does not perceive the OSD message, but when the user does not wear the 3D glasses, the user perceives the OSD message.

On the other hand, the 3D glasses 200 alternately opens and closes the left eye shutter glass and the right eye shutter glass according to the sync signals received from the stereoscopic image display apparatus 100, thereby allowing the user to watch the left eye image and the right eye image with her or his left and right eyes, respectively.

On the other hand, the display unit 130 may include at least one of a panel driving part (not shown), a display panel part (not shown), a backlight driving part (not shown), and a backlight emitting part (not shown). Detailed description on these components are omitted herein.

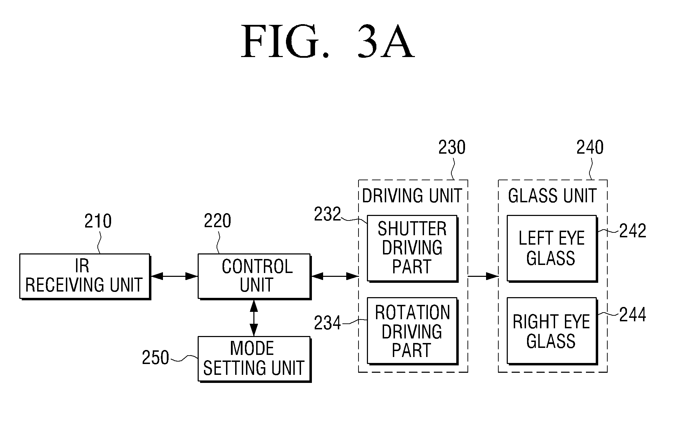

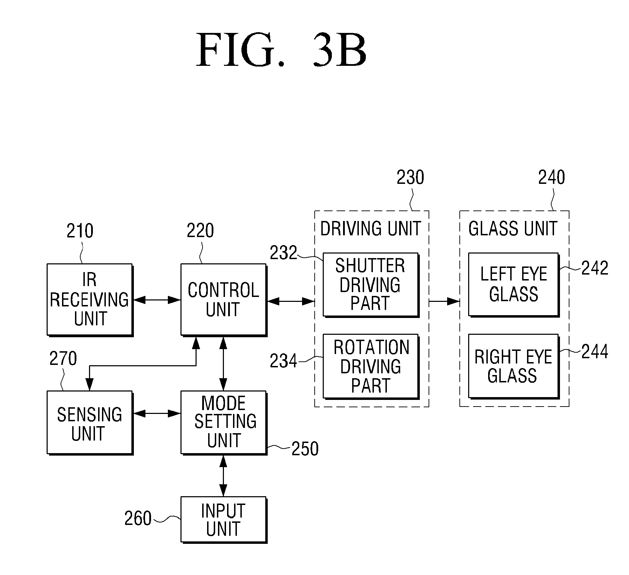

FIGS. 3A and 3B are views showing constructions of 3D glasses 200 according to various exemplary embodiments, respectively.

FIG. 3A is a block diagram showing a construction of the 3D glasses 200 according to an exemplary embodiment.

Referring to FIG. 3A, the 3D glasses 200 include a sync signal receiving unit (e.g., an lR receiving unit 210), a control unit 220, a driving unit 230, and a glass unit 240.

The lR receiving unit 210 receives one or more sync signals for a 3D image from the sync signal processing unit 180 of the display apparatus 100 connected by wire or wirelessly thereto. For example, the sync signal processing unit 180 emits the sync signal by using an infrared (lR) having straight-ability, and the lR receiving unit 210 receives the sync signals by receiving the emitted infrared (though it is understood that another exemplary embodiment is not limited to the sync signal being emitted by using an lR signal, and may be emitted for example using a Bluetooth signal).

For instance, the sync signals transmitted to the lR receiving unit 210 from the sync signal processing unit 180 may be signals in which a high level and a lower level are alternately repeated at predetermined time intervals. In this case, the 3D glasses will be embodied, so that the left eye image is provided for a period when the signal is a high level and the right eye image is provided for a period when the signal is a lower level.

The lR receiving unit 210 transmits the sync signals received from the sync signal processing unit 180, to the control unit 220.

The control unit 220 controls a general operation of the 3D glasses 200. Particularly, the control unit 220 creates a control signal based on the sync signals received from the lR receiving unit 210, and transmits the created control signal to the driving unit 230 to control the driving unit 230. ln particular, the control unit 230 controls the driving unit 230 based on the sync signals, to allow the driving unit 230 to create a driving signal for driving the glass unit 240.

As shown in FIG. 3A, the driving unit 230 includes a shutter driving part 232 and a rotation driving part 234. The shutter driving part 232 is a driving part for driving shutters of the glass unit 240, and the rotation driving part 234 is a driving part for rotating glasses of the glass unit 240.

The shutter driving part 232 creates shutter driving signals based on the control signal received from the control unit 220. Particularly, since the glass unit 240 includes a left eye shutter glass 242 and a right eye shutter glass 244, the shutter driving part 232 creates a left eye shutter driving signal for driving a shutter of the left eye shutter glass 242 and a right eye shutter driving signal for driving a shutter of the right eye shutter glass 244, and transmits the created left eye shutter driving signal and the right eye shutter driving signal to the left eye shutter glass 242 and the right eye shutter glass 244, respectively.

The rotation driving part 234 creates rotation driving signals based on a rotation control signal received from the control unit 230. Here, the rotation control signal includes information on rotational angle and rotational direction. Since the glass unit 240 includes the left eye shutter glass 242 and the right eye shutter glass 244, the rotation driving part 234 creates a left eye rotation driving signal for rotating the left eye shutter glass 242 and a right eye rotation driving signal for rotating the right eye shutter glass 244, and transmits the created left eye rotating driving signal and the right eye rotation driving signal to the left eye shutter glass 242 and the right eye shutter glass 244, respectively.

As described above, the glass unit 240 is made up of the left eye shutter glass 242 and the right eye shutter glass 244. ln addition, the glass unit 240 opens and closes the respective glasses according to the shutter driving signals received from the shutter driving part 232, and rotates the respective glasses according to the rotation driving signals received from the rotation driving part 234.

The shutters of the left eye shutter glass 242 and the right eye shutter glass 244 may be embodied by liquid crystals. ln other words, the glass unit 240 may open and close the shutters by using the liquid crystals of the left eye shutter glass 242 and the right eye shutter glass 244.

The mode setting unit 250 may set an operation mode of the glass unit 240 to a 3D viewing mode or a 2D viewing mode.

To be specific, the mode setting unit 250 may set the operation mode of the glass unit 240 to the 3D viewing mode or the 2D viewing mode according to a user command or a preset event inputted into the input unit or apparatus (not shown).

ln this case, the control unit 220 may control the driving unit 230 to change at least one of an opening and closing form and a rotational direction of the glass unit 240 according to the operation mode of the glass unit 240 set by the mode setting unit 250.

To be specific, if the operation mode of the glass unit 240 is set to the 2D viewing mode, the control unit 220 may simultaneously open and close the left eye glass and the right eye glass to block out the left eye image or the right eye image corresponding to a frame of the 3D image. In this case, the 3D glasses 200 may be shutter glass type 3D glasses.

For instance, if the operation mode of the glass unit 240 is set to a left eye-based 2D viewing mode, the control unit 220 may simultaneously open the left eye glass and the right eye glass when a left eye image is displayed on the display apparatus 100, and simultaneously close the left eye glass and the right eye glass when a right eye image is displayed on the display apparatus 100.

ln addition, if the operation mode of the glass unit 240 is set to a right eye-based 2D viewing mode, the control unit 220 may simultaneously close the left eye glass and the right eye glass when the left eye image is displayed on the display apparatus 100, and simultaneously open the left eye glass and the right eye glass when right eye the image is displayed on the display apparatus 100. Detailed explanation on this will be described below with reference to the drawings.

Also, if the operation mode of the glass unit 240 is set to the 2D viewing mode, the control unit 220 may rotate the left eye glass or the right eye glass to block out the left eye image or the right eye image forming the 3D image. ln this case, the 3D glasses 200 may be polarization glass type 3D glasses.

For instance, the glass or lens for right eye may be rotated in an angle of 90 degrees to completely block out right eye images, so that left eye images are continuously supplied in visual angles for left and right eyes.

Otherwise, the glass or lens for left eye may be rotated in an angle of 90 degrees to completely block out the left eye images, so that the right eye images are continuously supplied in the visual angles for left and right eyes. Detailed explanation on this will be described below with reference to the drawings.

Otherwise, the polarization glass type 3D glasses may be designed so that the lenses for left and right eyes are mounted to have the same directivity, thereby allowing the lenses to provide the 2D viewing mode.

On the other hand, although not illustrated in the drawings, the 3D glasses may further include a switch unit (not shown) for setting the operation mode of the glass unit 240 to the 2D viewing mode to therefore set the 2D viewing mode to a default value. ln this case, the control unit 220 may control the glass unit 240 in the 2D viewing mode, regardless of a posture of the user.

Further, the 3D glasses 200 further include a power supply (not shown) for supplying an electric power thereto. A power state of the power supply (not shown) may be controlled by the control unit 220.

Although in the above exemplary embodiment, the driving unit 230 is explained as including both the shutter driving part 232 and the rotation driving part 234, this is merely an exemplary embodiment, and the driving unit 230 may be embodied to include one of the shutter driving part 232 and the rotation driving part 234 according to another exemplary embodiment.

For instance, if the 3D glasses 200 are shutter glass type 3D glasses, the driving unit 230 may be embodied to include the shutter driving part 232, whereas if the 3D glasses 200 are polarization glass type 3D glasses, the driving unit 230 may be embodied to include the rotation driving part 234.

FIG. 3B is a block diagram showing a construction of the 3D glasses 200 according to another exemplary embodiment.

Referring to FIG. 3B, the 3D glasses 200 include a sync signal receiving unit (e.g., an lR receiving unit 210), a control unit 220, a driving unit 230, a glass unit 240, a mode setting unit 250, an input unit 260 and sensing unit 270. Among the components shown in FIG. 3B, components, which are in common with the components shown in FIG. 3A, will not be explained in detail.

The input unit 260 operates to input a user command for setting the operation mode of the glass unit 140. For instance, the input unit 260 may be embodied as a bottom type or a switch type, so that the user changes the operation mode of the glass unit 240 by pushing buttons or switches.

The sensing unit 270 operates to determine a slope of the 3D glasses 200 to a direction of gravity.

In this case, the control unit 220 may control to change the operation mode of the glass unit 220 according to the slope of the 3D glasses 200 determined by the sensing unit 270.

For instance, the sensing unit 270 may be embodied by a gravity sensor, and in this case, detect through the gravity sensor whether the user is in a vertical posture or in a reclining posture.

To be specific, the sensing unit 270 may sense the slope of the 3D glasses 200 to the direction of gravity.

In this case, if the slope of the 3D glasses 200 to the direction of gravity is within a given range, the control unit 220 may control the operation mode of the glass unit 240 to the 3D viewing mode, and if the slope of the 3D glasses 200 to the direction of gravity is beyond the given range, the control unit 220, the control unit 220 may control the operation mode of the glass unit 240 to the 2D viewing mode.

That is, if the slope of the 3D glasses 200 to the direction of gravity is beyond the given range, the control unit 200 may determine that the user is in the reclining posture and change the operation mode of the glass unit 240 to the 2D viewing mode.

In addition, if the slope of the 3D glasses 200 to the direction of gravity enters into the given range, the control unit 220 may determine that the user lies on his or her side and then stands straight and changes the operation mode of the glass unit 240 from the 2D viewing mode to the 3D viewing mode.

Also, as described above, the input unit 260 may further include the switch unit (not shown) for setting the operation mode of the glass unit 240 to the 2D viewing mode to thus fix the 2D viewing mode as the default mode. In this case, the control unit 220 may control the glass unit 240 to be always driven in the 2D viewing mode regardless of a posture of the user.

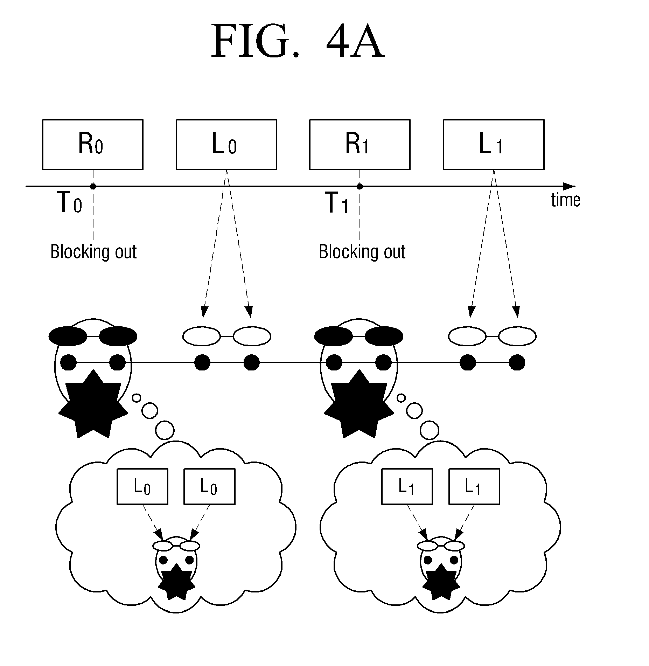

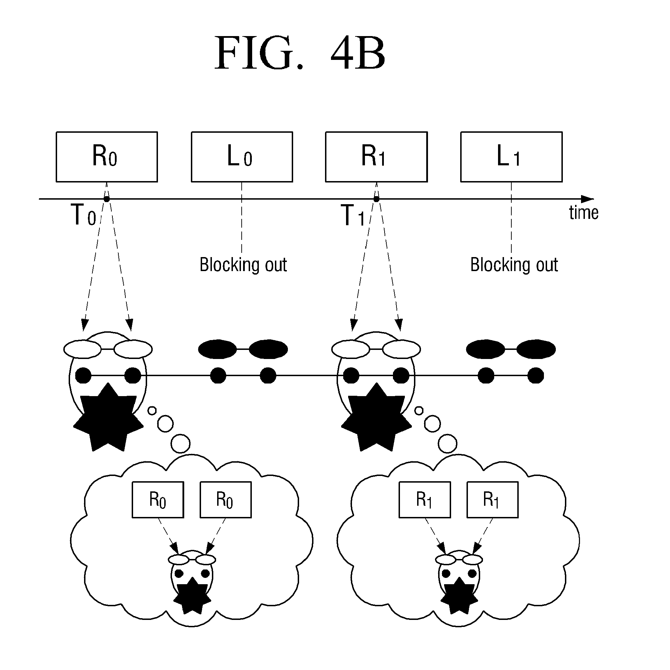

FIGS. 4A and 4B are views explaining methods for embodying the 2D viewing mode according to various exemplary embodiments, respectively.

FIG. 4A is a view explaining a left eye image-based 2D viewing mode in the shutter glass type 3D glasses.

Referring to FIG. 4A, the 3D glasses may be driven so that if a right eye image is displayed, both the left eye glass and the right glass of the 3D glasses are closed, and if a left eye image is displayed, both the left eye glass and the right glass of the 3D glasses are opened. Accordingly, even though a 3D image is displayed, the 3D glasses may be controlled to allow the user to watch the 3D image in the 2D viewing mode.

FIG. 4B is a view explaining a right eye image-based 2D viewing mode in the shutter glass type 3D glasses.

Referring to FIG. 4B, the 3D glasses may be driven so that if a right eye image is displayed, both the left eye glass and the right glass of the 3D glasses are opened, and if a left eye image is displayed, both the left eye glass and the right glass of the 3D glasses are closed. According to this, even though a 3D image is displayed, the 3D glasses themselves may be controlled to allow the user to watch the 3D image in the 2D viewing mode.

On the other hand, the passive type polarization glasses may embody the 2D viewing mode by rotating the left eye glass or the right eye glass at an angle of 90 degrees.

To be specific, if the right eye glass is rotated at the angle of 90 degrees, right eye images are completely blocked out and thus left eye images are provided to left and right eyes of the user, as shown in FIG. 4A. Also, if the left eye glass is rotated at the angle of 90 degrees, left eye images are completely blocked out and thus right eye images are continuously provided to the left and right eyes of the user, as shown in FIG. 4B. Accordingly, even though a 3D image is displayed, the 3D glasses may be controlled to allow the user to watch the 3D image in the 2D viewing mode.

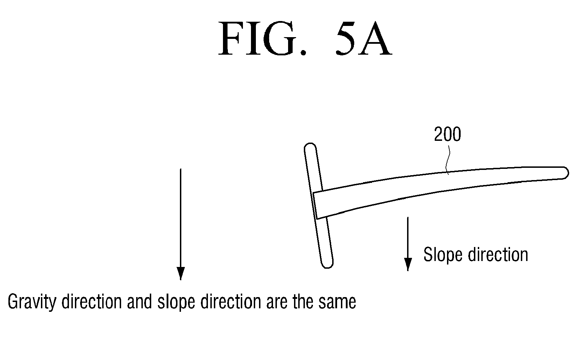

FIGS. 5A to 5C are views explaining a method for determining the viewing mode of the 3D glasses 200, according to an exemplary embodiment.

As shown in FIG. 5A, if the slope of the 3D glasses 200 is identical to the direction of gravity, the 3D glasses 200 may determine that the user is in a vertical posture. In this case, the operation mode of the 3D glasses 200 may be maintained in the 3D viewing mode.

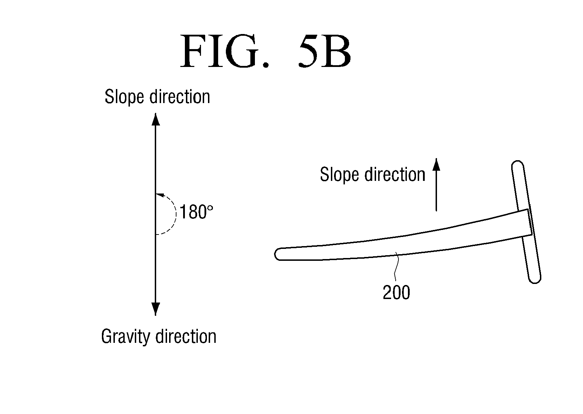

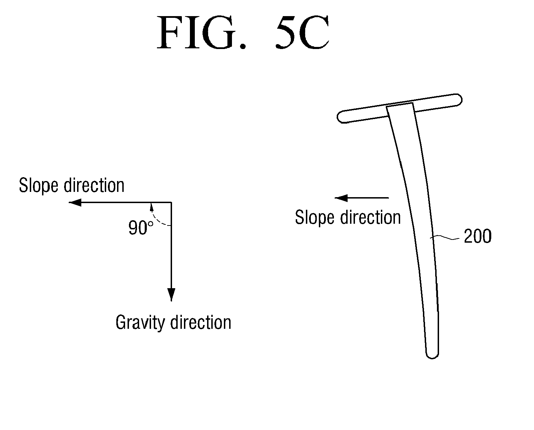

Also, as shown in FIGS. 5B and 5C, if the slope of the 3D glasses 200 is different by an angle of 180 degrees or 90 degrees from the direction of gravity, the 3D glasses 200 may determine that the user is in a reclining posture. In this case, the operation mode of the 3D glasses 200 may be changed from the 3D viewing mode to the 2D viewing mode.

Although in the exemplary embodiments as described above, the certain angles are explained as examples capable of determining the posture of the user, it is apparent that the exemplary embodiments may be easily changed or modified by those skilled in the art.

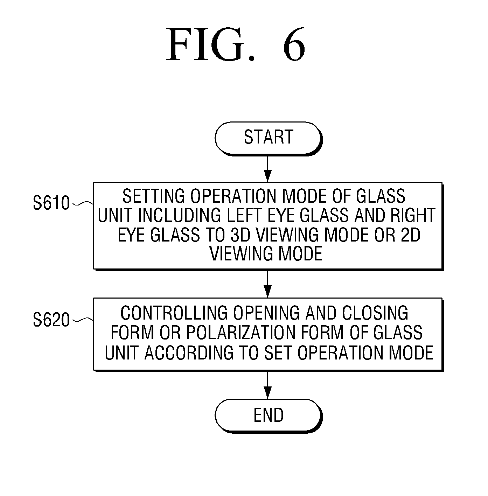

FIG. 6 is a flow chart explaining a control method of 3D glasses according to an exemplary embodiment.

Referring to FIG. 6, the control method of 3D glasses to view images displayed by a 3D display apparatus sets an operation mode of a glass unit including a left eye glass and a right eye glass to a 3D viewing mode or a 2D viewing mode (operation S610). In this case, the operation mode of the glass unit may be set according to a user command or a preset value.

Subsequently, an opening and closing form or a rotational direction of the glass unit is controlled according to the set operation mode (operation S620).

Here, the 3D glasses may be embodied as a shutter glasses type or a polarization glasses type.

If the 3D glasses are shutter glasses type glasses, the operation S620 may include simultaneously opening and closing the left eye glass and the right eye glass to block out a left eye image or a right eye image forming a 3D image when the operation mode of the glass unit is set to the 2D viewing mode.

For instance, if the right image is displayed, both the left eye glass and the right eye glass of the 3D glasses may be closed, and if the left eye image is displayed, both the left eye glass and the right eye glass of the 3D glasses may be opened.

Otherwise, if the right image is displayed, both the left eye glass and the right eye glass of the 3D glasses may be opened, and if the left eye image is displayed, both the left eye glass and the right eye glass of the 3D glasses may be closed. Accordingly, even though the 3D image is displayed, the 3D glasses themselves may be controlled to allow the user to watch the 3D image in the 2D viewing mode.

Also, if the 3D glasses are polarization glasses type glasses, the operation S620 may include rotating the left eye glass or the right eye glass to block out the left eye image or the right eye image corresponding to a frame of the 3D image when the operation mode of the glass unit is set to the 2D viewing mode. In this case, the left eye glass or the right eye glass may be rotated by an angle of 90 degrees.

To be specific, if the right eye glass is rotated at an angle of 90 degrees, the right eye images are completely blocked out and thus the left eye images may be supplied to left and right eyes of the user. Also, if the left eye glass is rotated at an angle of 90 degrees, the left eye images are completely blocked out and thus the right eye images may be continuously supplied to left and right eyes of the user. Accordingly, even though the 3D image is displayed, the 3D glasses themselves may be controlled to allow the user to watch the 3D image in the 2D viewing mode.

In addition, the control method of 3D glasses may further include determining a slope of the 3D glasses to a direction of gravity, and controlling to change the operation mode of the glass unit according to the determined slope of the 3D glasses.

To be specific, if the slope of the 3D glasses to the direction of gravity is within a given range, the operation mode of the glass unit may be controlled in the 3D viewing mode, and if the slope of the 3D glasses to the direction of gravity is beyond the given range, the operation mode of the glass unit may be controlled in the 2D viewing mode.

Also, the operation mode of the glass unit may be fixed according to a command for setting the operation mode of the glass unit to the 2D viewing mode thus to fix the 2D viewing mode as a default mode.

According to the exemplary embodiments as described above, the 3D glasses and the control method thereof can provide users with viewing modes adapted to their postures in the in-house viewing environment in which the more than two viewers share one display apparatus. For instance, if one user watches the 3D image on the display apparatus while standing up or sitting in the vertical posture and the other user looks at the display apparatus while lying down on a sofa or a floor with her or his head inclined, the laying-down user cannot feel the 3D effect. To allow the laying-down user to feel the 3D effect, the user must view an image source having binocular disparity in a vertical direction, to be displayed on the display apparatus. However, since 3D image sources provide a 3D effect based on a sequence of motion images obtained at two viewpoints on a horizontal axis, the 3D image sources do not provide the laying-down user the 3D effect. However, according to the present exemplary embodiment, the 3D glasses can be controlled to allow the laying-down user to see the 3D image as the 2D image.

As is apparent from the foregoing description, according to exemplary embodiments, a plurality of viewers can select viewing modes in which they want to watch and watch contents in the selected viewing modes, individually, in the space on which the one display apparatus is provided.

While not restricted thereto, exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, exemplary embodiments may be written as computer programs transmitted over a computer-readable transmission medium, such as a carrier wave, and received and implemented in general-use or special-purpose digital computers that execute the programs. Moreover, one or more units of the display apparatus 100 and the glasses 200 can include a processor or microprocessor executing a computer program stored in a computer-readable medium

Although has aspects have been explained with reference to exemplary embodiments, it is understood that the present inventive concept is not limited thereto. The present teaching can be readily applied to other types of apparatuses (e.g., image processing apparatuses that do not include a display) and many alternatives, modifications, and variations will be apparent to those skilled in the art. Thus, the scope of the present inventive concept is not to be construed as being limited to the description of exemplary embodiments, and is to be construed by the attached claims and equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. Three-dimensional (3D) glasses for viewing a 3D display apparatus, the 3D glasses comprising:
a glass unit comprising a left eye glass and a right eye glass;
a driving unit which drives the glass unit;
a mode setting unit which sets an operation mode of the glass unit between a 3D viewing mode or a 2D viewing mode; and
a control unit which controls the driving unit to change an opening and closing shutter setting or a rotational direction of the glass unit according to the operation mode set by the mode setting unit.

2. The 3D glasses of claim 1, wherein the 3D glasses are one of a shutter glass type glasses and a polarization glass type glasses.

3. The 3D glasses of claim 2, wherein:
the 3D glasses are the shutter glass type glasses; and
the control unit controls to simultaneously open and close the left eye glass and the right eye glass to block out one of a left eye image and a right eye image corresponding to a frame of a 3D image if the set operation mode of the glass unit is the 2D viewing mode.

4. The 3D glasses of claim 2 or 3, wherein:
the 3D glasses are the polarization glass type glasses; and
the control unit controls to rotate one of the left eye glass and the right eye glass to block out one of a left eye image and a right eye image corresponding to a frame of a 3D image if the set operation mode of the glass unit is the 2D viewing mode.

5. The 3D glasses of claim 4, wherein the control unit controls to rotate the one of the left eye glass and the right eye glass by an angle of 90 degrees.

6. The 3D glasses of anyone of claims 1 to 5, further comprising:
a sensing unit which determines a slope of the 3D glasses to a direction of gravity,
wherein the control unit controls to change the operation mode of the glass unit according to the determined slope of the 3D glasses determined by the sensing unit.

7. The 3D glasses of anyone of claims 1 to 6, wherein the mode setting unit sets the operation mode of the glass unit according to a user command or a preset value.

8. The 3D glasses of anyone of claims 1 to 7, further comprising:
a switch unit receive a user input to set the operation mode of the glass unit to the 2D viewing mode to fix the 2D viewing mode as a default viewing mode.

9. A control method of 3D glasses for viewing a 3D display apparatus, the control method comprising:
setting an operation mode of a glass unit, of the 3D glasses, including a left eye glass and a right eye glass between a 3D viewing mode or a 2D viewing mode; and
controlling an opening and closing shutter setting of the glass unit or a rotational direction of the glass unit according to the set operation mode.

10. The control method of claim 9, wherein the 3D glasses are one of a shutter glass type glasses and a polarization glass type glasses.

11. The control method of claim 10, wherein:
the 3D glasses are the shutter glass type glasses; and
the controlling comprises controlling to simultaneously open and close the left eye glass and the right eye glass to block out one of a left eye image and a right eye image corresponding to a frame of a 3D image if the set operation mode of the glass unit is the 2D viewing mode.

12. The control method of claim 10 or 11, wherein:
the 3D glasses are the polarization glass type glasses; and
the controlling comprises controlling to rotate one of the left eye glass and the right eye glass to block out one of a left eye image and a right eye image corresponding to a frame of a 3D image if the set operation mode of the glass unit is the 2D viewing mode.

13. The control method of claim 12, wherein the controlling to rotate comprises controlling to rotate the one of the left eye glass and the right eye glass by an angle of 90 degrees.

14. The control method of anyone of claims 9 to 13, further comprising:
determining a slope of the 3D glasses to a direction of gravity,
wherein the controlling comprises controlling to change the operation mode of the glass unit according to the determined slope of the 3D glasses.

15. The control method of anyone of claims 9 to 14, wherein the operation mode of the glass unit is set according to a user command or a preset value.
